# EUROPÄISCHE PATENTSCHRIFT

(11) **EP 3 845 442 B1**
(45) Veröffentlichungstag und Bekanntmachung des Hinweises auf die Patenterteilung: **11.02.2026**
(21) Anmeldenummer: 20216146.9
(22) Anmeldetag: 21.12.2020
(51) Int. Cl.: B62J 11/00, B62J 50/21, F16M 11/04, F16M 13/00

(54) **ANZEIGEEINHEIT, ANZEIGENEINHEITENSET UND ELEKTROFAHRRAD**
DISPLAY UNIT, DISPLAY UNIT SET AND ELECTRIC BICYCLE
UNITÉ D'AFFICHAGE, ENSEMBLE D'UNITÉ D'AFFICHAGE ET BICYCLETTE ÉLECTRIQUE

(30) Priorität: 03.01.2020 DE 102020200020
(43) Veröffentlichungstag der Anmeldung: 07.07.2021
(73) Patentinhaber: Smartscale NewCo AG, 4950 Huttwil (CH)
(72) Erfinder: Lanz, Simon, 4955 Gondiswil (CH); Röthlisberger, Daniel, 3414 Oberburg (CH); Woodtli, Robin, 4500 Solothurn (CH); Manderla, Gregor, 50733 Köln (DE); Afzal, Omar, 81379 München (DE)
(74) Vertreter: Isarpatent

(56) Entgegenhaltungen:
- EP-A1- 1 520 773
- EP-B1- 1 520 773
- DE-A1- 102014 117 466
- DE-U1- 202019 104 857
- ELECTRICBIKEREVIEW.COM: "COBI Bosch Hub Smartphone Interface Review - $249 GPS, Alarm, Electric Bike Display", 14 December 2017 (2017-12-14), XP093061513, Retrieved from the Internet <URL:https://www.youtube.com/watch?v=Da3_QcXJpfY> [retrieved on 20230706]

## Beschreibung

Die vorliegende Erfindung betrifft eine Anzeigeeinheit gemäß dem Oberbegriff des Anspruchs 1, ein Anzeigeeinheitenset gemäß dem Oberbegriff des Anspruchs 13 sowie ein Elektrofahrrad gemäß dem Oberbegriff des Anspruchs 14.

Aus dem Stand der Technik sind Elektrofahrräder bekannt, welche neben einer Antriebseinheit und einer Batterieeinheit auch eine Anzeigeeinheit mit abnehmbarem Anzeigeteil aufweisen. Die Anzeigeteile sind hierbei in das Führungsschienensystem einer Halterung einschiebbar und mit einer elastisch verschwenkbaren Befestigungslasche aus Kunststoff in der Halterung fixierbar.

Nachteilig bei derartigen Anzeigeeinheiten ist zum einen, dass das Einschieben der Anzeigeteile in das Führungsschienensystem wenig ergonomisch ist und es hierbei zu einem Verkanten der Anzeigeteile relativ zu der Halterung kommen kann. Das Abnehmen und Anbringen des abnehmbaren Anzeigeteils ist daher wenig intuitiv. Andererseits kann es bei häufiger Betätigung, niedrigen Außentemperaturen etc. zu einem Bruch der Befestigungslasche und damit zum Ausfall der Halterung kommen.

Der Erfindung liegt daher die Aufgabe zugrunde, eine verbesserte Anzeigeeinheit bereitzustellen, welche eine intuitive, zuverlässige Befestigung des Anzeigeteils ermöglicht.

Diese Aufgabe wird durch eine Anzeigeeinheit mit der Merkmalskombination des Anspruchs 1, einem Anzeigeeinheitenset mit der Merkmalskombination des Anspruchs 13 sowie durch ein Elektrofahrrad gemäß dem Anspruch 14. gelöst.

Dokument DE 102014117466A1 zeigt die Präambel des Anspruchs 1.

Die erfindungsgemäße Anzeigeeinheit für ein Elektrofahrrad weist eine fahrradseitige Halterung für ein Anzeigeteil mit einem Halteabschnitt auf. Erfindungsgemäß ist der Halteabschnitt zumindest abschnittsweise in die Halterung einführbar und mittels zumindest eines Verriegelungsschiebers formschlüssig fixierbar, wobei der Verriegelungsschieber im Halteabschnitt formschlüssig geführt und längsverschiebbar ist. Aufgrund des erfindungsgemäßen Einführens des Halteabschnitts in die Halterung kann es gegenüber einem Einschieben in Führungsschienen nicht zum Verkanten der Anzeigeteile kommen. Gegenüber einer Befestigungslasche kann es auch bei häufiger Betätigung, niedrigen Außentemperaturen etc. nicht zu einem Bruch des Verriegelungsschiebers kommen, da dieser nicht elastisch verformbar sein muss. Das Anzeigeteil kann intuitiv und ergonomisch vom Fahrer aus der Halterung entnommen und in diese eingesetzt werden.

Gemäß eines bevorzugten Ausführungsbeispiels der Erfindung ist das Anzeigeteil über den Halteabschnitt relativ zu der Halterung angewinkelt in diese einführbar und einschwenkbar. Bei diesem Ausführungsbeispiel erfolgt ein scharnierartiges Einhaken und Einschwenken des Anzeigeteils.

Alternativ ist das Anzeigeteil über den Halteabschnitt mittels einer Parallelverschiebung relativ zu der Halterung in diese einführbar. Das heißt, alternativ wird das Anzeigeteil nicht eingeschwenkt, sondern mittels einer Parallelverschiebung in die Halterung eingeschoben. Insbesondere wird das Anzeigeteil vom Fahrer gehalten und flach liegend in die Halterung eingerastet. Vorzugsweise wird das Anzeigeteil hierbei vom Fahrer senkrecht zu der Halterung bewegt und in die Halterung eingerastet. Dies ermöglicht eine optimale Integration des Anzeigeteils in den Lenkervorbau, da kein Schwenkbereich freibleibt. Das Anzeigeteil kann bündig und damit formschön in den Lenkervorbau integriert werden.

Eine Mischform aus Einschwenken und Parallelverschiebung ist bei einer weiteren Ausführungsform als Zuführung möglich. Diese Einführbewegung ist vom Zuführwinkel und Wirkpunkt der Zuführkraft des Anwenders abhängig.

Gemäß eines bevorzugten Ausführungsbeispiels ist das Anzeigeteil über den Halteabschnitt relativ zu der Halterung angewinkelt in diese einführbar und einschwenkbar. Die Anzeigeeinheit wird vorzugsweise mittels der Halterung am Lenker des Elektrofahrrads befestigt.

Die Halterung ist vorzugsweise als Halterungsschale ausgebildet.

Als besonders vorteilhaft hat es sich erwiesen, wenn die Halterung zumindest einen Befestigungsabschnitt aufweist, mit welcher ein Haltevorsprung des Halteabschnitts zur Befestigung des Anzeigeteils in Eingriff bringbar ist. Der Befestigungsabschnitt ist vorzugsweise mit einer Hinterschneidung versehen.

Der Haltevorsprung ist im Querschnitt vorzugsweise als keilförmiger Vorsprung ausgebildet und mit einer im Querschnitt entsprechend keilförmigen Ausnehmung der Halterung in Anlage bringbar. Die keilförmige Ausgestaltung erleichtert das Einführen, Positionieren und anschließende Verschwenken oder Einrücken des Anzeigeteils in die Halterung.

Der Haltevorsprung hat vorzugsweise einen hohlkehlförmigen Übergang zum Anzeigeteil. Dieser ist bei einem bevorzugten Ausführungsbeispiel mit einem abgerundeten Spitzenbereich des Befestigungsabschnitts in Anlage bringbar, so dass ein Schwenkgelenk ausgebildet ist.

Vorzugsweise weist der Halteabschnitt zumindest einen in den Befestigungsabschnitt der Halterung einschiebbaren Haltevorsprung auf.

Gemäß einer bevorzugten Ausführungsform weist die Halterung einen Verriegelungsabschnitt auf. Der Verriegelungsabschnitt ist dem Befestigungsabschnitt vorzugsweise gegenüberliegend angeordnet.

Bei einer bevorzugten Variante ist der Verriegelungsabschnitt als hakenförmige Hinterschneidung der Halterung ausgebildet.

Als vorteilhaft hat es sich erwiesen, wenn der Verriegelungsschieber zumindest einen Verriegelungsvorsprung aufweist, welcher zum Festlegen des Anzeigeteils mit dem Verriegelungsabschnitt der Halterung in Eingriff bringbar ist. Der Verriegelungsvorsprung ist vorzugsweise auf einer dem Fahrer abgewandten Seite des Verriegelungsschiebers vorgesehen. Vorzugsweise bildet der Verriegelungsvorsprung einen Rasthaken aus.

Vorzugsweise hat der Verriegelungsschieber zumindest einen Führungsschenkel, welcher in einer Führungsausnehmung des Halteabschnitts längsverschiebbar geführt ist.

Der Verriegelungsschieber ist vorzugsweise mittig an einer Stirnseite des Anzeigeteils angeordnet und dadurch ergomomisch zu betätigen.

Vorzugsweise ist der Verriegelungsschieber in Längsrichtung der Anzeigeeinheit verschiebbar. Dadurch kann der Verriegelungsschieber zur Abnahme der Anzeigeeinheit ergonomisch vorteilhaft vom Fahrer betätigt werden. Der Fahrer greift die Anzeigeeinheit mit einer Hand und betätigt hierbei den Verriegelungsschieber. Eine vorteilhafte Einhandentnahme ist gewährleistet.

Der Verriegelungsschieber weist bei einer besonders bevorzugten Ausführungsform der Erfindung eine Betätigungsschräge auf, welche gegen eine Anlaufschräge des Verriegelungsabschnitts der Halterung derart anlaufen kann, dass dieser den Verriegelungsschieber beim Einsetzen des Anzeigeteils in seine Offenstellung betätigt und der Fahrer den Schieber nicht eigens betätigen muss. Bei der Montage des Anzeigeteils wird der Verriegelungsschieber mittels einer an eine halterseitige Formschräge anlaufende Schrägfläche betätigt, d. h. eingerückt und das Anzeigeteil eingeführt. Alternativ oder zusätzlich kann der Verriegelungsschieber vom Fahrer mit der Hand eingerückt werden. Sobald das Anzeigeteil vollständig eingeführt ist, wird der Verriegelungsschieber mittels der Feder in seine Verriegelungsstellung gebracht. Das Anzeigeteil ist sicher gehalten. Der Fahrer kann dies optisch anhand des ausgerückten Verriegelungsschiebers erkennen und auch ein Rastgeräusch wahrnehmen.

Bei einem bevorzugten Ausführungsbeispiel erfolgt ein scharnierartiges Einhaken und Einschwenken des Anzeigeteils. Alternativ wird das Anzeigeteil nicht eingeschwenkt sondern mittels einer Parallelverschiebung in die Halterung eingeschoben.

Vorzugsweise ist der Verriegelungsvorsprung als stufenförmiger Verriegelungsabsatz des Verriegelungsschiebers ausgebildet. Zur Abnahme des Anzeigeteils betätigt der Fahrer den längsverschiebbaren Verriegelungsschieber, so dass der Verriegelungsabsatz außer Eingriff gelangt und das Anzeigeteil abgenommen werden kann.

Bei einem erfindungsgemäßen Ausführungsbeispiel der Anzeigeeinheit ist das Verriegelungsschieber mittels zumindest eines Federelements in seine Verriegelungsstellung beaufschlagt. Vorzugsweise stützt sich das Federelement an einer Innenwandung des Halteabschnitts und dem Verriegelungsschieber ab. Das Federelement ist bevorzugt eine Druckfeder, besonders bevorzugt eine mehrfach bogenförmige Formfeder.

Der Verriegelungsschieber weist zur Betätigung durch den Fahrer vorzugsweise einen oberhalb des Verriegelungsvorsprungs angeordneten Betätigungsabschnitt auf. Der Betätigungsabschnitt kragt hierbei bevorzugt aus dem Halteabschnitt aus. Dadurch kann dieser ergonomisch vom Fahrer gegen die Kraft der Feder betätigt und das Anzeigeteil mittels einer Schwenk- oder Hubbewegung abgenommen werden.

Die Halterung weist auf deren Unterseite bei einer bevorzugten Variante der Erfindung eine Ausnehmung zur Aufnahme eines Kontaktmoduls auf. Vorzugsweise weist das Kontaktmodul halterungsseitig Kontaktstifte (bspw. PogoPins) zur Kontaktierung des Anzeigeteils auf. Ferner ist das Kontaktmodul vorzugsweise mit sich angewinkelt zu diesem erstreckenden Steckerplätzen bzw. Steckeranschlüssen versehen. Bei einer bevorzugten Ausführungsform durchsetzt das Kontaktmodul abschnittsweise die Halterung bodenseitig, so dass Kontaktbereiche im Bereich der Oberseite der Halterung angeordnet sind. Das Kontaktmodul ist vorzugsweise mit der Halterung verschraubt.

Die Anzeigeeinheit ist gemäß einer Weiterbildung der Erfindung mit einer Entnahmesicherung versehen, welche vorzugsweise als Diebstahlsicherung ausgebildet ist. Hierbei ist im Bodenbereich des Halteabschnitts des Anzeigeteils bevorzugt eine Gewindebuchse vorgesehen. Zur Entnahmesicherung des Anzeigeteils ist hierbei eine die Halterung durchsetzende Sicherungsschraube in die Gewindebuchse eingeschraubt. Bei anschließend am Fahrrad montierter Halterung ist diese Sicherungsschraube verdeckt durch den Lenker bzw. Vorbau angeordnet und vor unbefugtem Lösen geschützt. Das Anzeigeteil ist dadurch gegen unbefugte Entnahme und Diebstahl gesichert.

Ein erfindungsgemäßes Anzeigeeinheitenset für ein Elektrofahrrad weist mehrere unterschiedlich ausgebildete, wahlweise anbringbare Anzeigeteile auf, wobei die Anzeigeteile insbesondere unterschiedlich große Anzeigebereiche aufweisen und wahlweise über einen Halteabschnitt mit einer fahrradseitigen Halterung verbindbar sind. Erfindungsgemäß ist der Halteabschnitt unterschiedlicher Anzeigeteile einheitlich ausgebildet, wobei die Anzeigeteile über den Halteabschnitt zumindest abschnittsweise in die Halterung einführbar und mittels zumindest eines Verriegelungsschiebers formschlüssig fixierbar sind, so dass unterschiedliche Anzeigeteile anbringbar sind. Dadurch ist ein modulares Konzept mit an unterschiedliche Fahrerwünsche und Fahrradtypen angepassten Anzeigeteilen einfach möglich. Der Fahrer kann unterschiedlich große Anzeigeteile für sein Fahrrad auswählen. Eine Anpassung an Fahrerwünsche ist ohne weitere Befestigungselemente möglich.

Ein erfindungsgemäßes Elektrofahrrad verwendet eine Anzeigeeinheit, wobei die Anzeigeeinheit eine fahrradseitige Halterung für ein Anzeigeteil mit einem Halteabschnitt aufweist. Erfindungsgemäß ist der Halteabschnitt in die Halterung zumindest abschnittsweise einführbar und mittels zumindest eines Verriegelungsschiebers formschlüssig in der Halterung fixierbar, wobei der Verriegelungsschieber im Halteabschnitt formschlüssig geführt und längsverschiebbar ist.

Dem Fahrer steht dadurch insgesamt eine Anzeigeeinheit mit größtmöglicher Anpassungsfähigkeit zur Verfügung.

Die Erfindung kann universell bei allen Typen von Fahrrädern, insbesondere bei Mountainbikes (sowohl in Hardtail- oder Full-Suspension-Bauweise), aber auch bei anderen Fahrrädern, bspw. Straßenrad-Rahmen realisiert werden und somit letztlich ein Touren-, City- oder Cross-Rad oder andere moderne Fahrradtypen ergeben.

Weitere bevorzugte Ausführungsformen sind Gegenstand der Unteransprüche.

Im Folgenden wird eine bevorzugte Ausführungsform der vorliegenden Erfindung unter Bezugnahme auf die beiliegenden Zeichnungen näher erläutert. Dabei zeigen die Zeichnungen im Einzelnen:
Figuren 1 und 2 perspektivische Darstellungen einer erfindungsgemäßen Anzeigeeinheit,
Figur 3 eine Draufsicht einer erfindungsgemäßen Anzeigeeinheit,
Figur 4 eine Schnittdarstellung entlang der Linie A-A aus Figur 3,
Figur 5 eine Schnittdarstellung des Anzeigeteils,
Figur 6 eine perspektivische Darstellung des Anzeigeteils,
Figur 7 eine Schnittdarstellung der Halterung,
Figuren 8, 9 und 10 jeweils eine perspektivische Darstellung der Halterung,

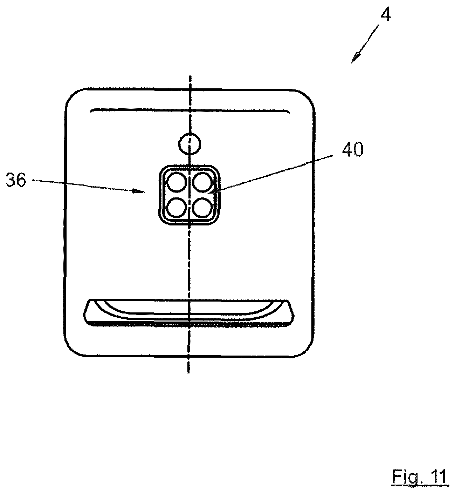

Figur 11 eine Draufsicht der Halterung,

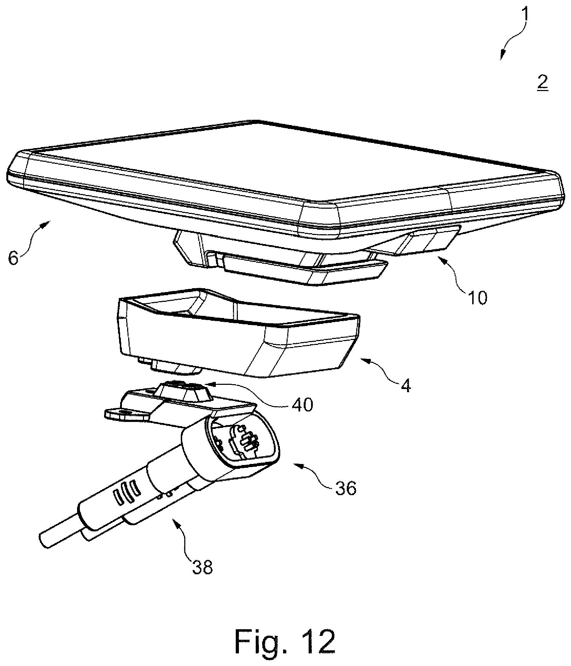

Figur 12 eine Explosionszeichnung der erfindungsgemäßen Anzeigeeinheit,
Figuren 13 bis 16 jeweils eine Darstellung während dem Einschwenken des Anzeigeteils in die Halterung,
Figuren 17 bis 20 jeweils eine Darstellung während dem parallelen Einsetzen des Anzeigeteils in die Halterung,
Figur 21 eine perspektivische Darstellung der Anzeigeeinheit mit Sicherungsschraube und
Figur 22 einen Längsschnitt der Anzeigeeinheit mit Sicherungsschraube aus Figur 21.

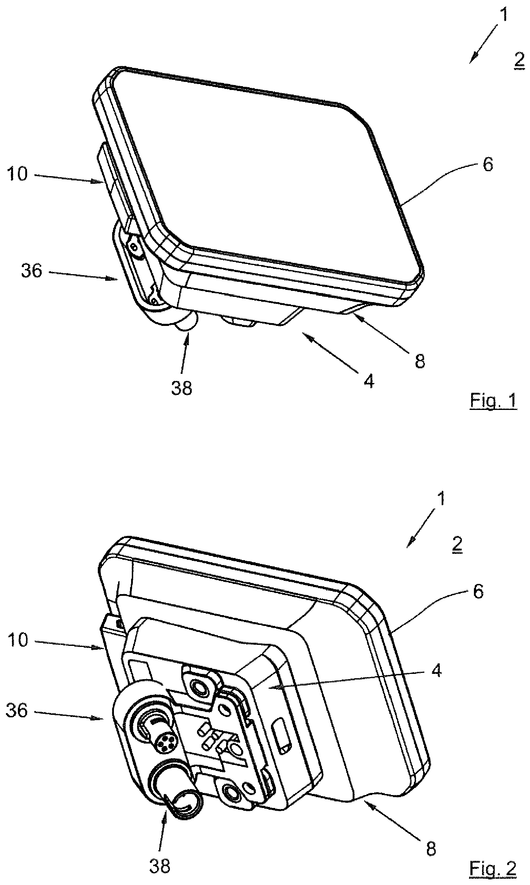

Die Figuren 1 und 2 zeigen jeweils eine perspektivische Darstellung einer erfindungsgemäßen Anzeigeeinheit 1 eines Elektrofahrrads 2 mit einer fahrradseitigen an einem nicht dargestellten Lenker oder einem Lenkervorbau vorgesehenen Halterung 4 für ein Anzeigeteil 6 bzw. Display.

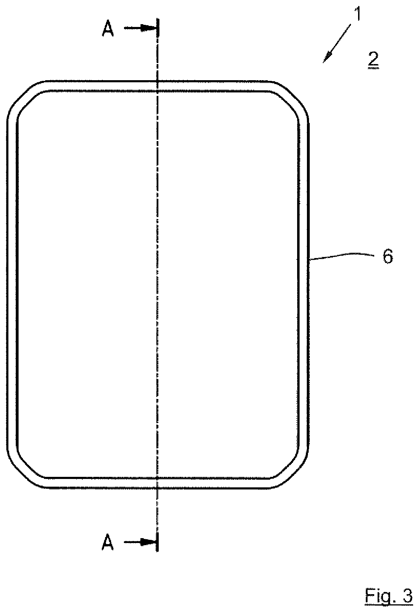

Figur 3 zeigt eine Draufsicht auf diese Anzeigeeinheit 1 mit Anzeigeteil 6.

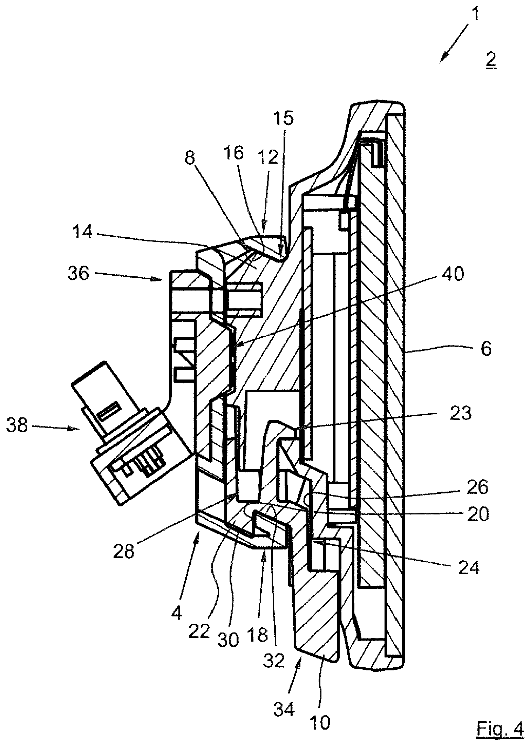

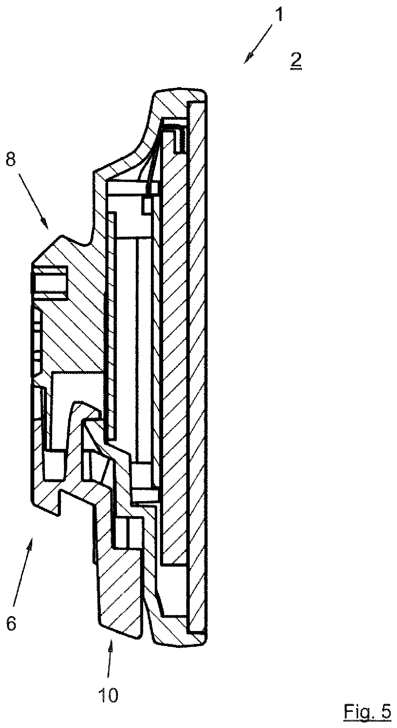

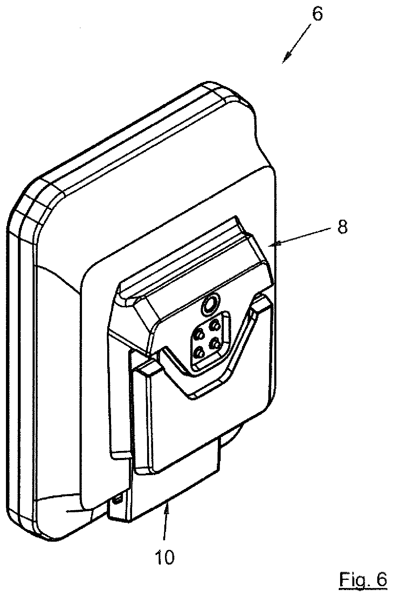

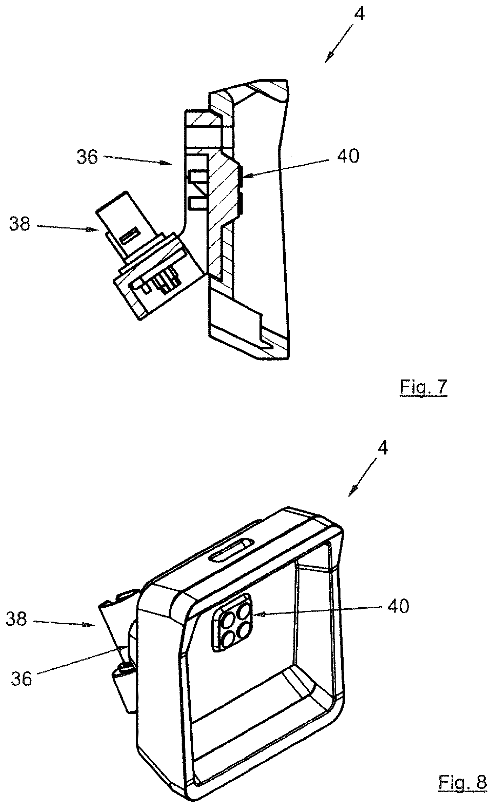

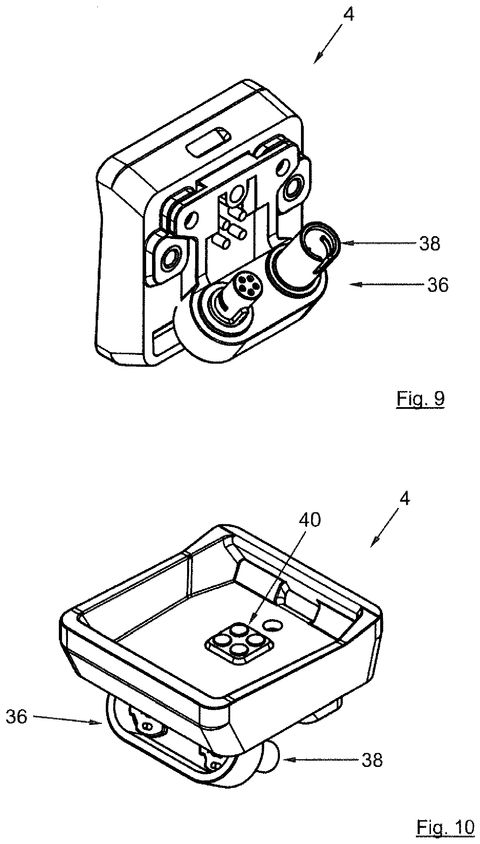

Wie Figur 4 zu entnehmen ist, welche einen Längsschnitt der Anzeigeeinheit 1 entlang der Linie A - A aus Figur 3 zeigt, sowie gemäß den Figuren 5 und 6, welche einen Längsschnitt des Anzeigeteils 6 ohne Halterung 4 sowie eine perspektivische Darstellung des Anzeigeteils 6 ohne Halterung 4 zeigen, sowie gemäß den Figuren 7 bis 9, welche einen Längsschnitt der Halterung 4 ohne Anzeigeteil 6 sowie weitere Darstellungen des Anzeigeteils 6 ohne Halterung 4 zeigen, weist das Anzeigeteil 6 einen Halteabschnitt 8 auf, welcher in die Halterung 4 einführbar und mittels eines Verriegelungsschiebers 10 formschlüssig fixierbar ist.

Die Figuren 1 bis 4 zeigen jeweils die Anzeigeeinheit 1 mit in der Halterung 4 arretiertem Anzeigeteil 6. Der Verriegelungsschieber 10 ist hierbei in seiner Verriegelungsstellung.

Die Halterung 4 weist insbesondere gemäß Figur 4 einen Befestigungsabschnitt 12 auf, mit welcher ein Haltevorsprung 14 des Halteabschnitts 8 zur Befestigung des Anzeigeteils 6 in Eingriff bringbar ist. Der Befestigungsabschnitt 12 ist mit einer Hinterschneidung 16 versehen. Der Haltevorsprung 14 ist im Querschnitt als etwa keilförmiger Vorsprung ausgebildet und mit der im Querschnitt entsprechend keilförmigen Hinterschneidung 16 bzw. Ausnehmung der Halterung 4 in Anlage bringbar. Die keilförmige Ausgestaltung erleichtert das Einführen, Positionieren und anschließende Verschwenken oder Einrücken des Anzeigeteils 6 in der Halterung 4. Die umlaufenden Seitenkanten des Anzeigeteils 6 sind abgerundet ausgebildet.

Der Haltevorsprung 14 hat einen hohlkehlförmigen Übergang 15 zum Bereich des Anzeigeteils 6. Dieser ist bei dem dargestellten Ausführungsbeispiel mit einem abgerundeten Spitzenbereich des Befestigungsabschnitts 12 in Anlage bringbar, so dass ein Schwenkgelenk ausgebildet ist. Die Halterung 4 ist mit einem Verriegelungsabschnitt 18 versehen, welcher dem Befestigungsabschnitt 12 gegenüberliegend angeordnet ist. Der Verriegelungsabschnitt 18 ist als hakenförmige Hinterschneidung 20 der Halterung 4 ausgebildet.

Der Verriegelungsschieber 10 weist einen Verriegelungsvorsprung 22 auf, welcher zum Festlegen des Anzeigeteils 6 mit dem Verriegelungsabschnitt 18 der Halterung 4 in Eingriff bringbar ist. Hierbei wird der Verriegelungsvorsprung 22 formschlüssig mittels der Hinterschneidung 20 der Halterung 4 fixiert. Der Verriegelungsvorsprung 22 ist auf einer dem Fahrer abgewandten Seite des Verriegelungsschiebers 10 vorgesehen und bildet einen Rasthaken aus. Dem Verriegelungsvorsprung 22 gegenüberliegend ist ein Fanghaken 23 ausgebildet, welcher sich an einer Gehäusewandung abstützt und den Verriegelungsschieber 10 in seiner Endstellung arretiert. Der Verriegelungsvorsprung 22 ist als stufenförmiger Verriegelungsabsatz des Verriegelungsschiebers 10 ausgebildet. Zur Abnahme des Anzeigeteils 6 betätigt der Fahrer den längsverschiebbaren Verriegelungsschieber 10, so dass der Verriegelungsabsatz außer Eingriff gelangt und das Anzeigeteil 6 abgenommen werden kann.

Der Verriegelungsschieber 10 ist mit einem Führungsschenkel 24 versehen, welcher in einer Führungsausnehmung 26 des Halteabschnitts 8 längsverschiebbar geführt ist. Er ist mittig an einer Stirnseite des Anzeigeteils 6 angeordnet und dadurch ergomomisch vom Fahrer zu betätigen.

Der Verriegelungsschieber 10 ist mittels eines als Druckfeder ausgebildeten Federelements 28 in seine Verriegelungsstellung beaufschlagt. Das Federelement 28 stützt sich an einer Innenwandung des Anzeigeteils 6 und dem Verriegelungsschieber 10 im Bereich des Verriegelungsvorsprungs 22 ab.

Eine Betätigungsschräge 30 ist am Verriegelungsschieber 10 vorgesehen, welche gegen eine Anlaufschräge 32 des Verriegelungsabschnitts 18 der Halterung 4 derart anlaufen kann, dass dieser den Verriegelungsschieber 10 beim Einsetzen des Anzeigeteils 6 in seine Offenstellung betätigt und der Fahrer den Schieber nicht eigens betätigen muss. Bei der Montage des Anzeigeteils 6 wird der Verriegelungsschieber 10 mittels der an die Anlaufschräge 32 als eine halterseitig Formschräge anlaufende Betätigungsschräge 30 betätigt, d. h. eingedrückt. Alternativ oder zusätzlich kann der Verriegelungsschieber 10 vom Fahrer mit der Hand betätigt bzw. eingedrückt werden. Sobald das Anzeigeteil 6 vollständig eingeführt ist, wird der Verriegelungsschieber 10 mittels des Federelements 28 in seine Verriegelungsstellung gebracht. Das Anzeigeteil 6 ist sicher in der Halterung 4 arretiert. Der Fahrer kann dies optisch anhand des ausgerückten Verriegelungsschiebers 10 erkennen und auch ein Rastgeräusch als akustisches Feedback wahrnehmen.

Der Verriegelungsschieber 10 weist zur Betätigung durch den Fahrer einen oberhalb des Verriegelungsvorsprungs 22 angeordneten Betätigungsabschnitt 34 auf. Der Betätigungsabschnitt 34 kragt hierbei aus dem Halteabschnitt 8 des Anzeigeteils 6 aus. Dadurch kann dieser ergonomisch vom Fahrer gegen die Kraft des Federelements 28 betätigt und das Anzeigeteil 6 mittels einer Schwenk- oder Parallelbewegung abgenommen werden.

Die Halterung 4 weist auf deren Unterseite eine Ausnehmung zur Aufnahme eines Kontaktmoduls 36 auf, welches mit Kontaktstiften (Pogo-Pins) zur Kontaktierung des Anzeigeteils 6 versehen ist. Ferner ist das Kontaktmodul mit sich angewinkelt zu diesem erstreckenden Steckerplätzen bzw. Steckeranschlüssen 38 versehen. Das Kontaktmodul 36 durchsetzt abschnittsweise die Halterung 4 bodenseitig, so dass ein Kontaktbereich 40 im Bereich der dem Anzeigeteil 6 zugewandten Oberseite der Halterung 4 angeordnet ist. Das Kontaktmodul 36 ist mit der Halterung verschraubt. Dies ermöglicht eine universelle Verwendung der Halterung.

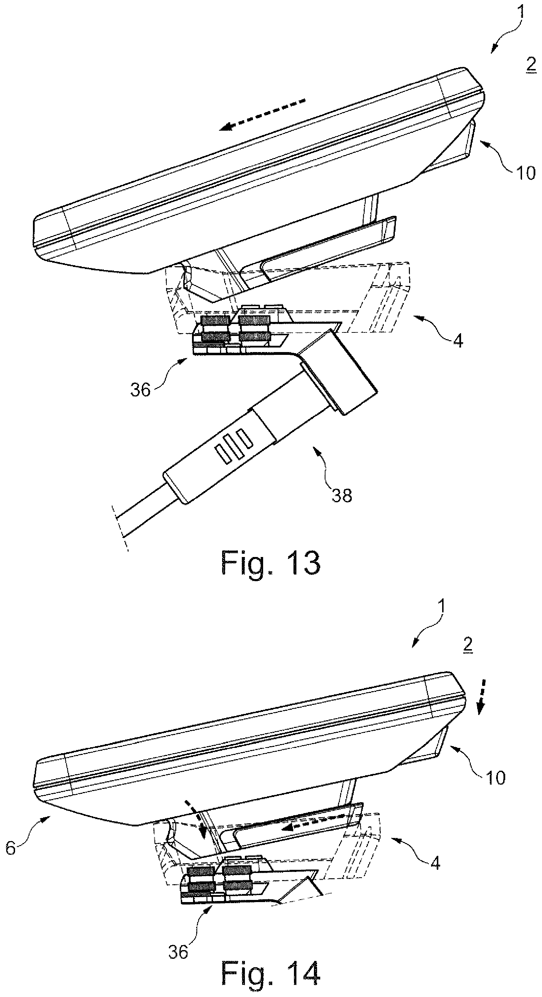

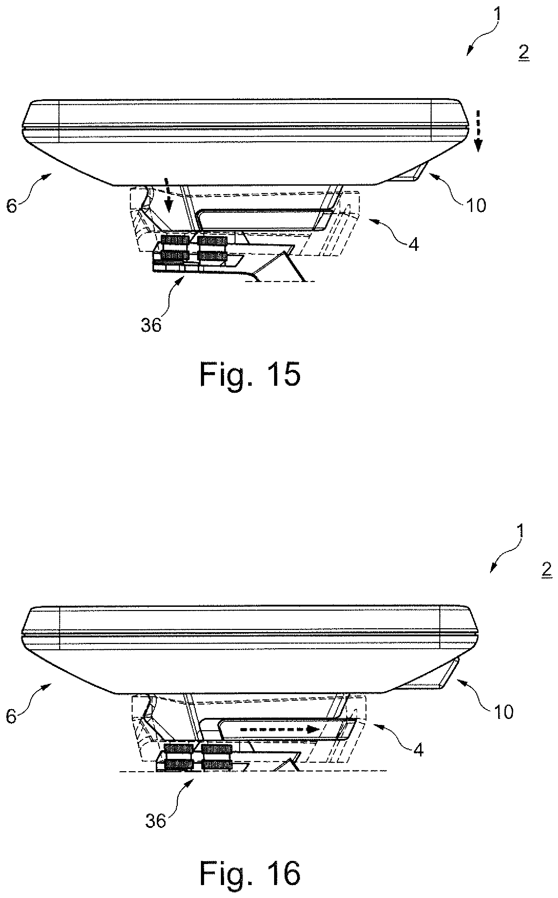

Im Folgenden wird die Arretierung der Anzeigeeinheit 1 näher erläutert. Bei einem ersten Beispiel erfolgt die Anbringung des Anzeigeteils 6 mittels eines scharnierartigen Einhakens und Einschwenkens des Anzeigeteils 6. Gemäß der Darstellungen aus den Figuren 13 bis 16 ist das Anzeigeteil 6 hierzu über den Halteabschnitt 8 relativ zu der Halterung 4 angewinkelt in diese einführbar (siehe Figur 13). Anschließend wird das Anzeigeteil 6 relativ zu der Halterung 4 verschwenkt, wobei der Verriegelungsschieber 10 mitels der Anlaufflächen in seine Entriegelungsposition bewegt wird (siehe Figuren 14 und 15; vgl. Pfeilrichtung). Gemäß Figur 16 ist das Anzeigeteil 6 vollständig in die Halterung 4 eingeschwenkt, wobei der Verriegelungsschieber 10 federbeaufschlagt in seine Verriegelungsstellung betätigt ist (siehe Pfeilrichtung).

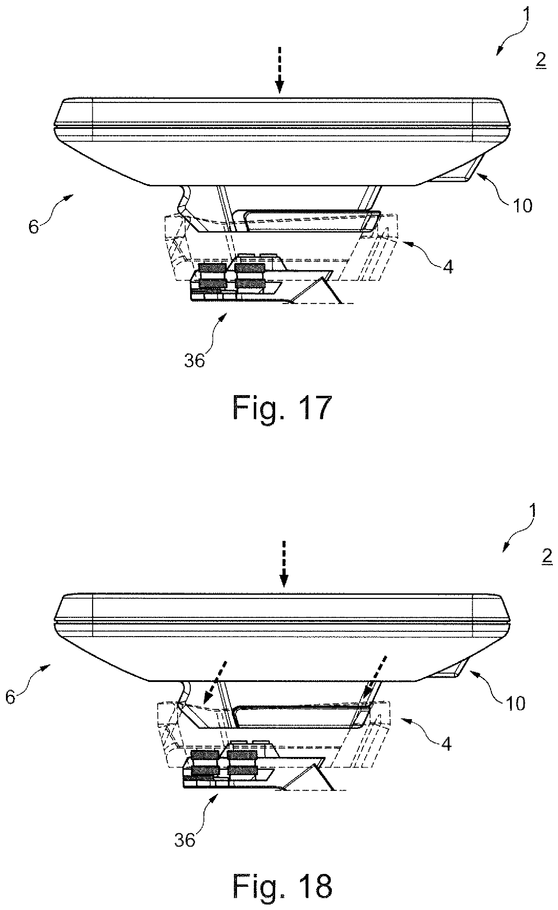

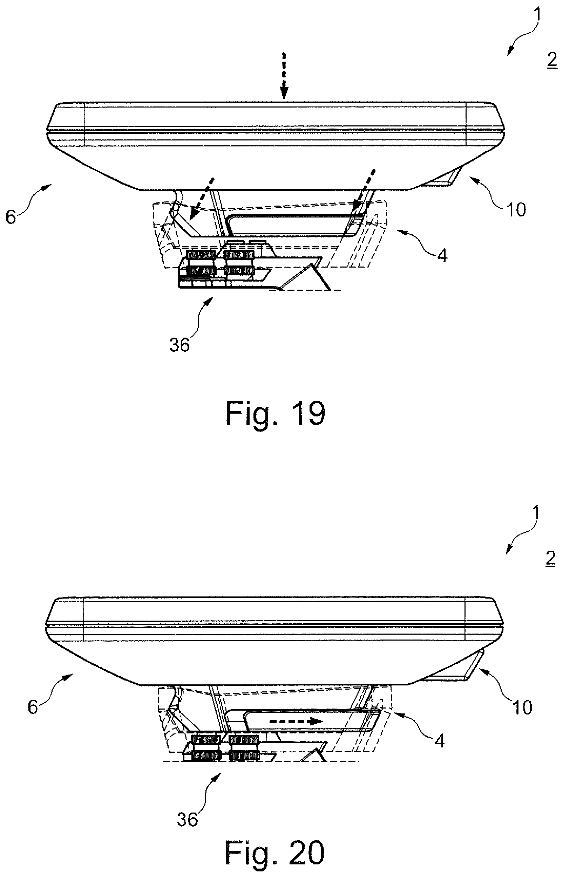

Alternativ kann das Anzeigeteil 6 mittels einer Parallelverschiebung in die Halterung 4 eingeschoben werden (siehe Pfeilrichtung). Hierbei wird das Anzeigeteil 6 vom Fahrer senkrecht zu der Halterung 4 bewegt und in die Halterung 4 eingerastet. Es erfolgt eine lineare Zuführung des Anzeigeteils. Dies ist in den Darstellung gemäß der Figuren 17 bis 20 gezeigt. Hierbei wird das Anzeigeteil 6 über den Halteabschnitt 8 mittels einer Parallelverschiebung relativ zu der Halterung 4 in diese eingeführt (siehe Pfeilrichtung). Die untere Formschräge des Halteabschnitts 8 dient hierbei als leitendes Element bzw. Rampe. Der Verriegelungsschieber 10 wird aufgrund der an die Schrägfläche anlaufenden Fläche gegen die Kraft des Federelements 28 in seine Öffnungsstellung betätigt. Gemäß Figur 18 ist der Verriegelungsschieber vollständig eingerückt. Die obere Formschräge des Halteabschnitts 8 dient nun als leitendes Element bzw. als Rampe. Das Anzeigeteil 6 gleitet mittels Parallelverschiebung in die Halterung 4 (siehe Figur 19). Gemäß Figur 20 ist der Halteabschnitt 8 des Anzeigeteils 6 vollständig in der Halterung 4 aufgenommen. Der Verriegelungsschieber 10 ist federbeaufschlagt in seine Verriegelungsstellung betätigt und das Anzeigeteil 6 arretiert. Diese Arretierungsmöglichkeit erlaubt eine optimale Integration des Anzeigeteils 6 in den Lenkervorbau, da kein Schwenkbereich erforderlich ist. Das Anzeigeteil 6 kann bündig und damit formschön in den Lenkervorbau integriert werden.

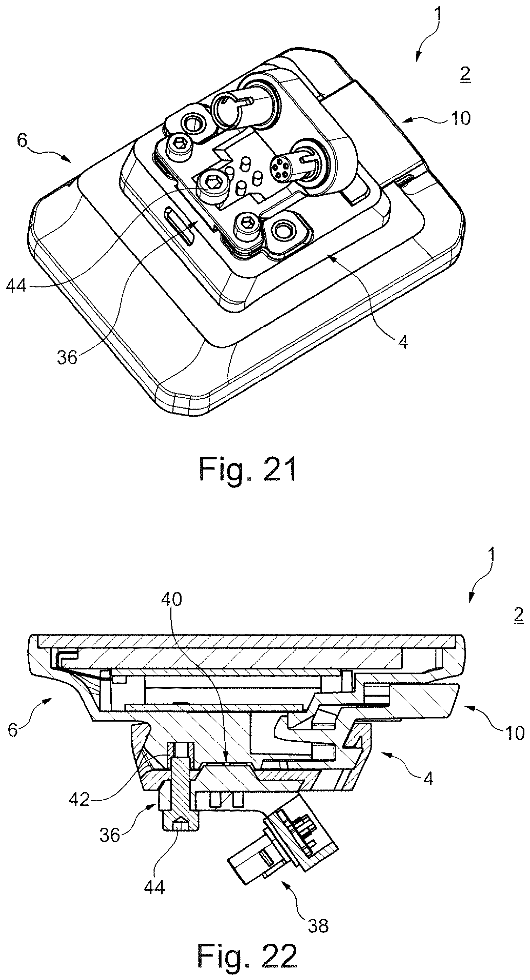

Die Anzeigeeinheit 1 kann gemäß Figur 21, welche eine perspektivische Darstellung der Anzeigeeinheit 1 zeigt, sowie einem Längsschnitt gemäß Figur 22, eine Entnahmesicherung aufweisen, welche vorzugsweise als Diebstahlsicherung ausgebildet ist. Hierbei ist im Bodenbereich des Halteabschnitts 8 des Anzeigeteils 6 eine Gewindebuchse 42 vorgesehen. Die Gewindebuchse ist etwa mittig zur Längsachse des Anzeigeteils 6 angeordnet. Zur Entnahmesicherung des Anzeigeteils 6 ist eine die Halterung 4 durchsetzende Sicherungsschraube 44 in die Gewindebuchse eingeschraubt. Bei anschließend am Fahrrad montierter Halterung 4 ist die Sicherungsschraube 44 verdeckt durch den Lenker bzw. Vorbau angeordnet und vor unbefugtem Lösen geschützt. Das Anzeigeteil 6 ist dadurch gegen unbefugte Entnahme und Diebstahl gesichert.

Ein erfindungsgemäßes Anzeigeeinheitenset weist mehrere unterschiedlich ausgebildete, wahlweise anbringbare Anzeigeteile 6 auf, wobei die Anzeigeteile 6 unterschiedlich große Anzeigebereiche aufweisen und wahlweise über den einheitlichen Halteabschnitt 8 mit der universellen, fahrradseitigen Halterung 4 verbindbar sind. Die Halteabschnitte 8 unterschiedlicher Anzeigeteile 6 sind einheitlich ausgebildet. Dadurch ist ein modulares Konzept mit an unterschiedliche Fahrerwünsche und Fahrradtypen angepassten Anzeigeteilen 6 einfach möglich. Der Fahrer kann unterschiedlich große Anzeigeteile 6 für sein Fahrrad auswählen.

Offenbart ist eine Anzeigeeinheit 1 für ein Elektrofahrrad 2 mit einer fahrradseitigen Halterung 4 für ein Anzeigeteil 6, wobei das Anzeigeteil 6 einen Halteabschnitt 8 aufweist, wobei der Halteabschnitt 8 in die Halterung 4 einführbar und mittels zumindest eines Verriegelungsschiebers 10 formschlüssig in der Halterung 4 fixierbar ist. Weiterhin offenbart ist ein Anzeigeeinheitenset für ein Elektrofahrrad 2 mit mehreren unterschiedlich ausgebildeten, wahlweise anbringbaren Anzeigeteilen 6, wobei die Anzeigeteile 6 vorzugsweise unterschiedlich große Anzeigebereiche aufweisen und wahlweise über einen einheitlichen Halteabschnitt 8 mit einer fahrradseitigen Halterung 4 verbindbar sind, wobei der Halteabschnitt 8 unterschiedlicher Anzeigeteile 6 einheitlich ausgebildet ist und wobei die Anzeigeteile 6 in die Halterung 4 einführbar und mittels zumindest eines Verriegelungsschiebers 10 formschlüssig fixierbar sind, so dass unterschiedliche Anzeigeteile 6 anbringbar sind. Ferner offenbart ist ein Elektrofahrrad 2 mit einer Anzeigeeinheit 1, wobei die Anzeigeeinheit 1 eine fahrradseitigen Halterung 4 für ein Anzeigeteil 6 mit einem Halteabschnitt 8 aufweist, wobei der Halteabschnitt 8 in die Halterung 4 einführbar und mittels zumindest eines Verriegelungsschiebers 10 formschlüssig fixierbar ist.

### Bezugszeichenliste

- 1: Anzeigeeinheit
- 2: Elektrofahrrad
- 4: Halterung
- 6: Anzeigeteil
- 8: Halteabschnitt
- 10: Verriegelungsschieber
- 12: Befestigungsabschnitt
- 14: Haltevorsprung
- 15: hohlkehlförmiger Übergang
- 16: Hinterschneidung
- 18: Verriegelungsabschnitt
- 20: Hinterschneidung
- 22: Verriegelungsvorsprung
- 23: Fanghaken
- 24: Führungsschenkel
- 26: Führungsausnehmung
- 28: Federelement
- 30: Betätigungsschräge
- 32: Anlaufschräge
- 34: Betätigungsabschnitt
- 36: Kontaktmodul
- 38: Steckerplatz
- 40: Kontaktbereich
- 42: Gewindebuchse
- 44: Sicherungsschraube

## Patentansprüche

1. Anzeigeeinheit (1) für ein Elektrofahrrad (2) mit einer fahrradseitigen Halterung (4) für ein Anzeigeteil (6), wobei das Anzeigeteil (6) einen Halteabschnitt (8) aufweist, **dadurch gekennzeichnet, dass** der Halteabschnitt (8) zumindest abschnittsweise in die Halterung (4) einführbar und mittels zumindest eines Verriegelungsschiebers (10) formschlüssig in der Halterung (4) fixierbar ist, **gekennzeichnet dadurch, dass** der Verriegelungsschieber (10) im Halteabschnitt (8) formschlüssig geführt und längsverschiebbar ist.

2. Anzeigeeinheit nach Anspruch 1, wobei das Anzeigeteil (6) über den Halteabschnitt (8) relativ zu der Halterung angewinkelt in diese einführbar und einschwenkbar ist.

3. Anzeigeeinheit nach Anspruch 1 oder 2, wobei das Anzeigeteil (6) über den Halteabschnitt (8) mittels einer Parallelverschiebung relativ zu der Halterung (4) in diese einführbar ist.

4. Anzeigeeinheit nach einem der vorhergehenden Ansprüche, wobei die Halterung (4) zumindest einen Befestigungsabschnitt (12) aufweist, mit welcher ein Haltevorsprung (14) des Halteabschnitts (8) zur Befestigung des Anzeigeteils (6) in Eingriff bringbar ist.

5. Anzeigeeinheit nach Anspruch 4, wobei der Haltevorsprung (14) im Querschnitt als keilförmiger Vorsprung ausgebildet und mit einer im Querschnitt entsprechend keilförmigen Hinterschneidung (16) der Halterung (4) in Anlage bringbar ist.

6. Anzeigeeinheit nach einem der vorhergehenden Ansprüche, wobei die Halterung (4) einen Verriegelungsabschnitt (18) aufweist, welcher als hakenförmige Hinterschneidung (20) der Halterung (4) ausgebildet ist.

7. Anzeigeeinheit nach einem der vorhergehenden Ansprüche, wobei der Verriegelungsschieber (10) zumindest einen Verriegelungsvorsprung (22) aufweist, welcher zum Festlegen des Anzeigeteils (6) mit dem Verriegelungsabschnitt (18) der Halterung (4) in Eingriff bringbar ist.

8. Anzeigeeinheit nach Anspruch 7, wobei der Verriegelungsvorsprung (22) als stufenförmiger Verriegelungsabsatz des Verriegelungsschiebers (10) ausgebildet ist.

9. Anzeigeeinheit nach Anspruch 7 oder 8, wobei der Verriegelungsschieber (10) einen oberhalb des Verriegelungsvorsprungs (22) angeordneten Betätigungsabschnitt (34) aufweist.

10. Anzeigeeinheit nach einem der vorhergehenden Ansprüche, wobei der Verriegelungsschieber (10) mittels zumindest eines Federelements (28) in seine Verriegelungsstellung beaufschlagt ist.

11. Anzeigeeinheit nach einem der vorhergehenden Ansprüche, wobei die Halterung (4) auf deren Unterseite eine Ausnehmung zur Aufnahme eines Kontaktmoduls (36) aufweist.

12. Anzeigeeinheit nach einem der vorhergehenden Ansprüche, mit einer Entnahmesicherung für das Anzeigeteil (6), wobei das Anzeigeteil (6) mittels zumindest einer Sicherungsschraube (44) an der Halterung (4) fixierbar ist.

13. Anzeigeeinheitenset für ein Elektrofahrrad (2) mit mehreren unterschiedlich ausgebildeten, wahlweise anbringbaren Anzeigeteilen (6), wobei die Anzeigeteile (6) vorzugsweise unterschiedlich große Anzeigebereiche aufweisen und wahlweise über einen Halteabschnitt (8) mit einer fahrradseitigen Halterung (4) verbindbar sind, **dadurch gekennzeichnet, dass** die Halteabschnitte (8) unterschiedlicher Anzeigeteile (6) einheitlich ausgebildet sind, wobei die Anzeigeteile (6) in die Halterung (4) einführbar und mittels zumindest eines Verriegelungsschiebers (10) formschlüssig fixierbar sind, **gekennzeichnet dadurch, dass** der Verriegelungsschieber (10) im Halteabschnitt (8) formschlüssig geführt und längsverschiebbar ist.

14. Elektrofahrrad mit einer Anzeigeeinheit (1), wobei die Anzeigeeinheit (1) eine fahrradseitige Halterung (4) für ein Anzeigeteil (6) mit einem Halteabschnitt (8) aufweist, **dadurch gekennzeichnet, dass** der Halteabschnitt (8) zumindest abschnittsweise in die Halterung (4) einführbar und mittels zumindest eines Verriegelungsschiebers (10) formschlüssig fixierbar ist, **gekennzeichnet dadurch, dass** der Verriegelungsschieber (10) im Halteabschnitt (8) formschlüssig geführt und längsverschiebbar ist.

## Claims

1. Display unit (1) for an electric bicycle (2), comprising a bicycle-side holder (4) for a display part (6), the display part (6) having a retaining portion (8), **characterised in that** the retaining portion (8) can be inserted at least in portions into the holder (4) and can be fixed positively in the holder (4) by means of at least one locking slide (10), **characterised in that** the locking slide (10) is positively guided and longitudinally displaceable in the retaining portion (8).

2. Display unit according to claim 1, wherein the display part (6) can be inserted and pivoted into the holder at an angle relative to said holder, via the retaining portion (8).

3. Display unit according to either claim 1 or claim 2, wherein the display part (6) can be inserted into the holder (4) via the retaining portion (8) by means of a parallel displacement relative to said holder.

4. Display unit according to any of the preceding claims, wherein the holder (4) has at least one fastening portion (12), with which a retaining projection (14) of the retaining portion (8) can be engaged to fasten the display part (6).

5. Display unit according to claim 4, wherein the retaining projection (14) is formed as a wedge-shaped projection in cross section and can be brought into contact with an undercut (16), correspondingly wedge-shaped in cross section, of the holder (4).

6. Display unit according to any of the preceding claims, wherein the holder (4) has a locking portion (18) formed as a hook-shaped undercut (20) of the holder (4).

7. Display unit according to any of the preceding claims, wherein the locking slide (10) has at least one locking projection (22), which can be engaged with the locking portion (18) of the holder (4) to secure the display part (6).

8. Display unit according to claim 7, wherein the locking projection (22) is formed as a stepped locking shoulder of the locking slide (10).

9. Display unit according to either claim 7 or 8, wherein the locking slide (10) has an actuating portion (34) arranged above the locking projection (22).

10. Display unit according to any of the preceding claims, wherein the locking slide (10) is loaded into its locked position by at least one spring element (28).

11. Display unit according to any of the preceding claims, wherein the holder (4) has a recess on its underside for receiving a contact module (36).

12. Display unit according to any of the preceding claims, comprising a removal guard for the display part (6), wherein the display part (6) can be fixed to the holder (4) by means of at least one securing screw (44).

13. Display unit set for an electric bicycle (2), comprising a plurality of differently formed, selectively attachable display parts (6), the display parts (6) preferably having differently sized display regions and being selectively connectable to a bicycle-side holder (4) via a retaining portion (8), **characterised in that** the retaining portions (8) of different display parts (6) are formed uniformly, the display parts (6) being insertable into the holder (4) and being fixable positively by means of at least one locking slide (10), **characterised in that** the locking slide (10) is positively guided and longitudinally displaceable in the retaining portion (8).

14. Electric bicycle comprising a display unit (1), the display unit (1) having a bicycle-side holder (4) for a display part (6) comprising a retaining portion (8), **characterised in that** the retaining portion (8) can be inserted at least in portions into the holder (4) and can be fixed positively by means of at least one locking slide (10), **characterised in that** the locking slide (10) is positively guided and longitudinally displaceable in the retaining portion (8).

## Revendications

1. Unité d'affichage (1) pour un vélo électrique (2) avec un support (4) côté vélo pour un élément d'affichage (6), l'élément d'affichage (6) présentant une partie de retenue (8), **caractérisée en ce que** la partie de retenue (8) peut être insérée au moins par sections dans le support (4) et peut être fixée par complémentarité de forme dans le support (4) au moyen d'au moins un coulisseau de verrouillage (10), **caractérisée en ce que** le coulisseau de verrouillage (10) est guidé par complémentarité de forme et déplaçable longitudinalement dans la partie de retenue (8).

2. Unité d'affichage selon la revendication 1, dans laquelle l'élément d'affichage (6) peut être inséré dans le support de manière inclinée par rapport à celui-ci et y être rentrée par pivotement via la partie de retenue (8).

3. Unité d'affichage selon la revendication 1 ou 2, dans laquelle l'élément d'affichage (6) peut être inséré dans le support (4) au moyen d'un déplacement parallèle par rapport à celui-ci via la partie de retenue (8).

4. Unité d'affichage selon l'une des revendications précédentes, dans laquelle le support (4) présente au moins une partie de fixation (12) avec laquelle une saillie de retenue (14) de la partie de retenue (8) peut être mise en prise pour fixer l'élément d'affichage (6).

5. Unité d'affichage selon la revendication 4, dans laquelle la saillie de retenue (14) est réalisée sous la forme d'une saillie en forme de coin en section transversale et peut être mise en contact avec une contre-dépouille (16) en forme de coin correspondante en section transversale du support (4).

6. Unité d'affichage selon l'une des revendications précédentes, dans laquelle le support (4) présente une partie de verrouillage (18) qui est réalisée sous la forme d'une contre-dépouille en forme de crochet (20) du support (4).

7. Unité d'affichage selon l'une des revendications précédentes, dans laquelle le coulisseau de verrouillage (10) présente au moins une saillie de verrouillage (22) qui peut être mise en prise avec la partie de verrouillage (18) du support (4) pour fixer l'élément d'affichage (6).

8. Unité d'affichage selon la revendication 7, dans laquelle la saillie de verrouillage (22) est réalisée sous la forme d'un épaulement de verrouillage étagé du coulisseau de verrouillage (10).

9. Unité d'affichage selon la revendication 7 ou 8, dans laquelle le coulisseau de verrouillage (10) présente une partie d'actionnement (34) disposée au-dessus de la saillie de verrouillage (22).

10. Unité d'affichage selon l'une des revendications précédentes, dans laquelle le coulisseau de verrouillage (10) est sollicité dans sa position de verrouillage au moyen d'au moins un élément ressort (28).

11. Unité d'affichage selon l'une des revendications précédentes, dans laquelle le support (4) présente sur sa face inférieure un évidement destiné à recevoir un module de contact (36).

12. Unité d'affichage selon l'une des revendications précédentes, avec un dispositif de blocage anti-retrait pour l'élément d'affichage (6), l'élément d'affichage (6) pouvant être fixé au support (4) au moyen d'au moins une vis de blocage (44).

13. Ensemble unité d'affichage pour un vélo électrique (2) avec plusieurs éléments d'affichage (6) de conception différente pouvant être montés au choix, les éléments d'affichage (6) présentant de préférence des zones d'affichage de tailles différentes et pouvant être reliés au choix à un support (4) côté vélo via une partie de retenue (8), **caractérisé en ce que** les parties de retenue (8) des différents éléments d'affichage (6) sont réalisées de manière uniforme, les éléments d'affichage (6) pouvant être insérés dans le support (4) et y être fixés par complémentarité de forme au moyen d'au moins un coulisseau de verrouillage (10), **caractérisé en ce que** le coulisseau de verrouillage (10) est guidé par complémentarité de forme et déplaçable longitudinalement dans la partie de retenue (8).

14. Vélo électrique doté d'une unité d'affichage (1), l'unité d'affichage (1) présentant un support (4) côté vélo pour un élément d'affichage (6) comportant une partie de retenue (8), **caractérisé en ce que** la partie de retenue (8) peut être insérée au moins par sections dans le support (4) et peut être fixée par complémentarité de forme au moyen d'au moins un coulisseau de verrouillage (10), **caractérisé en ce que** le coulisseau de verrouillage (10) est guidé par complémentarité de forme et déplaçable longitudinalement dans la partie de retenue (8).
